# EUROPÄISCHE PATENTANMELDUNG

(11) **EP 4 344 892 A1**
(43) Veröffentlichungstag der Anmeldung: **03.04.2024**
(21) Anmeldenummer: 22198402.4
(22) Anmeldetag: 28.09.2022
(51) Int. Cl.: B41M 5/00, B41M 5/50, C09D 11/32

(54) **VERFAHREN ZUM BEDRUCKEN EINES GEGENSTANDES**

(71) Anmelder: SWISS KRONO Tec AG, 6004 Luzern (CH)
(72) Erfinder: OLDORFF, Frank, 19057 Schwerin (DE)
(74) Vertreter: Gramm, Lins & Partner Patent- und Rechtsanwälte PartGmbB

(57) **Zusammenfassung**

Die Erfindung betrifft ein Verfahren zum Bedrucken eines Gegenstandes mittels einer Digitaldruckanlage, wobei die Digitaldruckanlage eine Singlepass-Digitaldruckanlage mit mehreren Farbauftragswerken zum Aufbringen von Drucktinten unterschiedlicher Farben ist, wobei eine der Farben schwarz ist und die schwarze Tinte schwarze Pigmentpartikel beinhaltet, wobei die schwarzen Pigmentpartikel eine Ausdehnung von wenigstens 50 nm und höchstens 90 nm aufweisen.

## Beschreibung

Die Erfindung betrifft ein Verfahren zum Bedrucken eines Gegenstandes mittels einer Digitaldruckanlage, wobei die Digitaldruckanlage eine Singlepass-Digitaldruckanlage mit mehreren Farbauftragswerken zum Aufbringen von Drucktinten unterschiedlicher Farben ist, wobei eine der Farben schwarz ist und die schwarze Tinte schwarze Pigmentpartikel beinhaltet.

Derartige Verfahren sind aus dem Stand der Technik seit langem bekannt. Der zu bedrucken der Gegenstand kann beispielsweise ein Papier oder ein Laminatpaneel sein, wie sie beispielsweise zur Herstellung von Fußbodenpaneelen oder Möbelplatten verwendet werden. Insbesondere das Bedrucken von Papieren ist seit vielen Jahren bekannt, wobei die bedruckten Papiere für unterschiedlichste Zwecke verwendet werden. In Form von Dekorpapieren, also Papieren, die mit einem Dekor bedruckt werden, sind sie beispielsweise für die Herstellung von Laminatpaneelen, beispielsweise zur Herstellung von Fußbodenpaneelen oder Wand- und Deckenverkleidungen, aber auch bei der Herstellung von Möbelplatten verwendbar. Dabei wird das gewünschte Dekor, beispielsweise ein Echtholzdekor, auf eine Papierbahn oder ein Papierblatt aufgedruckt. Dieses wird dann beispielsweise mit einem Kern, vorzugsweise einer Holzwerkstoffplatte, verpresst.

Digitaldruckanlagen, mit denen Gegenstände, insbesondere Papiere, bedruckt werden können, sind ebenfalls seit Jahren aus dem Stand der Technik bekannt. Singlepass-Digitaldruckanlagen, bei denen der zu bedruckende Gegenstand die Druckanlage nur einmal durchlaufen muss, werden beispielsweise in der Verpackungsindustrie verwendet, um Verpackungsmaterialien, beispielsweise Kartons, zu bedrucken. Die Anforderungen an den Druck und die Qualität des so erzeugten Dekors sind in diesem Fall jedoch deutlich geringer als bei der Herstellung der bereits genannten Dekorpapiere beispielsweise für die oben genannten Zwecke. Dies gilt sowohl für die Qualität des einzelnen Drucks des Dekors als auch für die Reproduzierbarkeit der Dekor.

Die verwendete Drucktinten beinhaltet farbige Pigmente, durch die die gewünschte Farbwirkung hervorgerufen wird. Bei schwarzen Pigmentpartikel handelt es sich in der Regel um Rußpartikel. Wird die Drucktinte auf den zu bedruckenden Gegenstand, beispielsweise ein Papier, aufgetragen, dringt die Tinte je nach Oberflächenstruktur des Gegenstandes in die Oberfläche des Gegenstandes ein. Dies ist einerseits gewünscht und von Vorteil, da dadurch Feuchtigkeit von der Oberfläche des Gegenstandes abgeführt wird und die Tinte schnell trocknet. Andererseits ist dies von Nachteil, dazu tief in den Gegenstand eingedrungene Partikel nur einen kleinen oder gar keinen Beitrag zur Farbwirkung leisten. Daher ist es insbesondere für qualitativ hochwertige Dekordrucker, beispielsweise für Dekorpapiere für die oben genannten Zwecke notwendig, die zu bedruckende Oberfläche des Gegenstandes, beispielsweise des Papiers auf die Größe der verwendeten Partikel anzupassen und gegebenenfalls so vorzubereiten, dass die Partikel nicht zu weit in den Gegenstand eindringen.

Nachteilig ist, dass die Verwendung einer schwarzen Drucktinte zu einem Verschleiß an einer Druckdüse des schwarzen Farbauftragswerkes führt und so einen relativ hohen Wartungs- und Reparaturaufwand bedeutet.

Der Erfindung liegt daher die Aufgabe zugrunde, diesen Nachteil zu beheben oder zumindest zu vermindern.

Die Erfindung löst die gestellte Aufgabe durch ein Verfahren gemäß dem Oberbegriff des Anspruchs 1, das sich dadurch auszeichnet, dass die schwarzen Pigmentpartikel eine Ausdehnung von wenigstens 50 nm und höchstens 90 nm aufweisen. Damit sind sie deutlich kleiner als die im Stand der Technik als schwarze Pigmentpartikel verwendeten Rußpartikel und führen so überraschender Weise zu weniger Verschleiß am Druckkopf und dessen Druckdüse. Mit dem Merkmal, dass die schwarzen Pigmentpartikel die genannte Ausdehnung aufweisen, ist insbesondere gemeint, dass die Mehrzahl, vorzugsweise wenigstens 60 %, besonders bevorzugt wenigstens 80 %, weiter bevorzugt wenigstens 90 %, optimaler Weise 100 % der schwarzen Pigmentpartikel eine Ausdehnung zwischen 50 nm und 90 nm aufweisen. Vorteilhafter Weise weisen die schwarzen Pigmentpartikel im Durchschnitt eine Ausdehnung von wenigstens 50 nm und höchstens 90 nm auf. Durch die Herstellungsverfahren der schwarzen Pigmentpartikel ist es sehr wahrscheinlich, dass auch kleinere und größere Pigmentpartikel vorhanden sind.

Die Ausdehnung der schwarzen Pigmentpartikel, die erfindungsgemäß zwischen 50 nm und 90 nm beträgt, wird vorzugsweise in der Richtung der größten Ausdehnung der schwarzen Pigmentpartikel gemessen. Die schwarzen Pigmentpartikel weisen folglich in wenigstens einer Richtung eine Ausdehnung von wenigstens 50 nm und höchstens 90 nm auf. Vorzugsweise weisen die schwarzen Pigmentpartikel in zwei aufeinander senkrecht stehenden Richtungen eine Ausdehnung von wenigstens 50 nm und höchstens 90 nm auf. Vorzugsweise weisen die schwarzen Pigmentpartikel in keiner Richtung eine Ausdehnung von mehr als 90 nm auf.

Durch die erfindungsgemäße Größe der schwarzen Pigmentpartikel wird einerseits erreicht, dass ein Verschleiß am Druckkopf und Druckdüse, die zum Aufbringen der schwarzen Drucktinten verwendet wird, reduziert wird. Andererseits weisen die schwarzen Pigmentpartikel eine Größe auf, die ausreichend ist, um ein zu tiefes Einsinken oder Eindringen in die Oberfläche des zu bedruckenden Gegenstandes, beispielsweise eines Dekorpapiers, zu vermeiden.

Vorzugsweise weisen die schwarzen Pigmentpartikel eine Ausdehnung von wenigstens 55 nm, bevorzugt wenigstens 60 nm, besonders bevorzugt wenigstens 65 nm und von höchstens 85 nm, bevorzugt höchstens 80 nm, besonders bevorzugt höchstens 75 nm auf. Höchst bevorzugt weisen die schwarzen Pigmentpartikel eine Ausdehnung von 70 nm auf.

In einer bevorzugten Ausgestaltung wird der zu bedruckende Gegenstand vor dem Aufbringen der Drucktinte wenigstens einmal mit einem Primer beschichtet. Dadurch wird die Oberfläche, die später mit der Drucktinte vernetzt wird, so verändert, dass insbesondere die schwarze Drucktinte mit den enthaltenen schwarzen Pigmentpartikel nicht zu tief in die Oberfläche eindringen kann.

Vorteilhafterweise ist der zu bedruckende Gegenstand ein Dekorpapier, das einen Gurley-Wert zwischen 18 s/100ml und 23 s/100ml und/oder eine Grammatur von wenigstens 30 g/m², vorzugsweise wenigstens 40g/m², besonders bevorzugt wenigstens 50g/m² und von höchstens 130g/m², bevorzugt höchstens 100g/m², besonders bevorzugt höchstens 70g/m² aufweist. Der Gurley-Wert wird bestimmt, indem unter genormten Bedingungen, die in der Norm ISO 5636-5, in der am Anmeldetag der vorliegenden Anmeldung geltenden Fassung definiert sind, eine vorbestimmte Menge Luft durch eine vorbestimmte Fläche der Papieroberfläche zu drücken. Dabei ist sowohl der zu verwendende Druck als auch die Fläche vorbestimmt und definiert. Die Luftmenge beträgt beispielsweise 100 ml, so dass das Ergebnis in der Einheit Sekunden pro 100 ml Luft (s/100ml) angegeben wird.

Der Gurley-Wert kann von der Grammatur des Papieres abhängen. Besonders Bevorzugt beträgt der Gurley-Wert 21 s/100ml bei einer Grammatur von 50 g/m² oder 20 s/100ml bei einer Grammatur von 65 g/m². Dabei handelt es sich um Durchschnittswerte, die sich aus vielen Messungen, beispielsweise wenigsten 100 Messungen, ergeben. Diese Werte sind bevorzugte Gurley-Werte des zu bedruckenden Papiers, das noch nicht mit einem Primer beschichtet wurde. Dieses Papier wird auch Rohpapier genannt. Nach dem Aufbringen des Primers liegt der Gurley-Wert vorzugsweise zwischen 19 s/100ml und 28 s/100ml. Besonders bevorzugte Ausgestaltungen haben dann einen Gurley-Wert von 26 s/100ml bei einer Grammatur des Rohpapiers von 50 g/m² oder von 21 s/100ml bei einer Grammatur des Rohpapiers von 65 g/m².

Nach dem Bedrucken des mit dem Primer behandelten Papiers, also nach dem Aufbringen der verschiedenen Drucktinten liegt der Gurley-Wert vorzugsweise zwischen 21 s/100ml und 28 s/100ml. Im Durchschnitt liegt der Gurlex-Wert vorzugsweise bei 24 s/100ml. Der Gurley-Wert des bedruckten Dekorpapiers hängt natürlich von dem aufgebrachten Dekor ab. Bei einem farbintensiven Dekor, bei dem eine hohe Menge an Drucktinte aufgebracht wird, liegt der Gurley-Wert höher als bei einem Dekor, bei dem die aufgebrachte Menge Drucktinte geringer ist. Dies ist unabhängig von der Grammatur des verwendeten Rohpapiers.

Vorzugsweise wird der Gurley-Wert bestimmt, nachdem das Dekorpapier wenigstens einmal, bevorzugt wenigstens zweimal mit dem Primer bedruckt wurde.

In einer bevorzugten Ausgestaltung des Verfahrens wird das Dekorpapier auf der Schönseite des Papiers bedruckt. Bei seiner Herstellung liegt ein Papier mit seiner Unterseite auf einem Sieb, das auch als Filz bezeichnet wird, auf. Diese Seite wird Siebseite genannt und in der Regel nicht extra behandelt. Der Siebseite oder Unterseite gegenüber liegt die sogenannte Schönseite, also die Oberseite des Papiers.

Vorzugsweise wird der zu bedruckende Gegenstand nach dem Aufbringen des Primers getrocknet. Dazu ist wenigstens ein Trockner vorhanden, der beispielsweise über das Aufbringen von warmer Luft oder Infrarotstrahlung eine Trocknungswirkung hervorruft.

Vorzugsweise wird ein hier beschriebenes Verfahren mittels einer Digitaldruckanlage durchgeführt, die besonders bevorzugt als Singlepass-Digitaldruckanlage ausgebildet ist. Die Digitaldruckanlage verfügt über mehrere Farbauftragswerke, die jeweils zum Aufbringen von Drucktinte einer Farbe verwendet werden. Vorzugsweise verfügt die Digitaldruckanlage zudem über wenigstens ein Auftragswerk, mit dem ein Primer auf die zu bedruckende Oberfläche des Gegenstandes aufgebracht wird. Die Feuchtigkeit der Oberfläche des zu bedruckenden Gegenstandes ist ein wichtiges Kriterium für die Qualität des aufgebrachten Dekors, dass mit der Digitaldruckanlage aufgedruckt wird. Dies ist insbesondere zutreffend, wenn es sich bei dem zu bedruckenden Gegenstand um ein Papier handelt. Sowohl beim Aufbringen des Primer als auch beim Bedrucken der Oberfläche mit den verschiedenen Drucktinten wird Feuchtigkeit auf die Oberfläche des Gegenstandes und insbesondere beim Bedrucken eines Papiers auch in den Gegenstand eingebracht.

Eine Digitaldruckanlage zum Durchführen eines der hier beschriebenen Verfahren verfügt daher über wenigstens einen Trockner, mit dem der zu bedruckende Gegenstand und insbesondere dessen zu bedruckende Oberfläche getrocknet werden kann. Vorzugsweise ist ein solcher Trockner derart angeordnet, dass der zu bedruckende Gegenstand nach dem Durchlaufen des wenigstens einen Primer-Auftragswerke dem Trockner zugeführt und/oder durch den Trockner hindurchgeführt wird. Besonders bevorzugt ist ein Feuchtigkeitssensor vorhanden, der die Feuchtigkeit der Oberfläche des Gegenstandes nach dem Durchlaufen des wenigstens einen Primer-Auftragswerke misst. Die Messdaten eines derartigen Sensors werden an eine elektrische Steuerung, beispielsweise eine elektronische Datenverarbeitungseinrichtung, übermittelt. Diese ist eingerichtet, die Digitaldruckanlage zu steuern. Die elektrische Steuerung ist eingerichtet, die vom wenigstens ein Feuchtigkeitssensor gemessenen Feuchtigkeit zu bedruckenden Oberfläche mit einem Soll-Wert zu vergleichen und anhand dieses Vergleiches den wenigstens einen Trockner so zu steuern, dass die Feuchtigkeit der zu bedruckenden Oberfläche nach dem Durchlaufen des Trockners, insbesondere also nach dem Trocknen, innerhalb eines vorbestimmten Parameterbereiches liegt.

In einer bevorzugten Ausgestaltung verfügt die Digitaldruckanlage über wenigstens einen Trockner, der in Prozessrichtung hinter den Farbauftragswerken angeordnet ist, mit denen die Drucktinte auf die zu bedruckende Oberfläche aufgebracht wird. Vorzugsweise befindet sich zwischen den Farbauftragswerken und dem wenigstens einen Trockner ein Feuchtigkeitssensor, der die Feuchtigkeit der zu bedruckenden Oberfläche misst und dessen Messwerte von der elektrischen Steuerung zum Steuern des Trockners verwendet werden, der in Prozess Richtung hinter dem Feuchtigkeitssensor angeordnet ist.

## Patentansprüche

1. Verfahren zum Bedrucken eines Gegenstandes mittels einer Digitaldruckanlage, wobei die Digitaldruckanlage eine Singlepass-Digitaldruckanlage mit mehreren Farbauftragswerken zum Aufbringen von Drucktinten unterschiedlicher Farben ist, wobei eine der Farben schwarz ist und die schwarze Tinte schwarze Pigmentpartikel beinhaltet, **dadurch gekennzeichnet, dass** die schwarzen Pigmentpartikel eine Ausdehnung von wenigstens 50 nm und höchstens 90 nm aufweisen.

2. Verfahren nach Anspruch 1, **dadurch gekennzeichnet, dass** die schwarzen Pigmentpartikel eine Ausdehnung von wenigstens 55 nm, bevorzugt wenigstens 60 nm, besonders bevorzugt wenigstens 65 nm und von höchstens 85 nm, bevorzugt höchstens 80 nm, besonders bevorzugt höchstens 75 nm aufweisen.

3. Verfahren nach Anspruch 1 oder 2, **dadurch gekennzeichnet, dass** die schwarzen Pigmentpartikel eine Ausdehnung von 70 nm aufweisen.

4. Verfahren nach einem der vorstehenden Ansprüche, **dadurch gekennzeichnet, dass** der zu bedruckende Gegenstand vor dem Aufbringen der Drucktinte wenigstens einmal mit einem Primer beschichtet wird.

5. Verfahren nach einem der vorstehenden Ansprüche, **dadurch gekennzeichnet dass** der Gegenstand ein Dekorpapier ist, das einen Gurley-Wert zwischen 18 s/100ml und 23 s/100ml und/oder eine Grammatur von wenigsten 30 g/m², vorzugsweise wenigstens 40 g/m², besonders bevorzugt wenigstens 50 g/m² und höchstens 130 g/m², bevorzugt höchstens 100 g/m², besonders bevorzugt höchstens 70 g/m² aufweist.

6. Verfahren nach Anspruch 5, **dadurch gekennzeichnet, dass** der Gurley-Wert bestimmt wird, nachdem das Dekorpapier wenigstens einmal, bevorzugt wenigstens zweimal mit dem Primer bedruckt wurde.

7. Verfahren nach Anspruch 5 oder 6, **dadurch gekennzeichnet, dass** das Dekorpapier auf der Schönseite des Papiers bedruckt wird.

8. Verfahren nach einem der vorstehenden Ansprüche 4 bis 7, **dadurch gekennzeichnet, dass** der zu bedruckende Gegenstand nach dem Aufbringen des Primers getrocknet wird.
